# FASCICULE DE BREVET EUROPEEN

(11) **EP 0 742 533 B1**
(45) Date de publication et mention de la délivrance du brevet: **02.10.2002**
(21) Numéro de dépôt: 96106258.5
(22) Date de dépôt: 20.04.1996
(51) Int. Cl.: G06K 19/077

(54) **Carte de paiement électronique à module interchangeable**
Elektronische Zahlungskarte mit auswechselbarem Modul
Electronic payment card with interchangeable module

(30) Priorité: 11.05.1995 FR 9505698
(43) Date de publication de la demande: 13.11.1996
(73) Titulaire: SCHLUMBERGER Systèmes, 92120 Montrouge (FR)
(72) Inventeur: Monicault, André, 92140 - Clamart (FR)
(74) Mandataire: Lemoyne, Didier

(56) Documents cités:
- EP-A- 0 617 382
- EP-A- 0 702 325
- DE-C- 3 804 361
- DE-U- 9 310 093
- FR-A- 2 538 930

## Description

La présente invention concerne une carte de paiement électronique du type carte à mémoire.

L'invention trouve une application particulièrement avantageuse dans le domaine des transactions électroniques mettant en oeuvre des cartes à mémoire, notamment la publiphonie dans laquelle les taxes téléphoniques sont acquittées à l'aide de télécartes prépayées.

D'une manière générale, les cartes à mémoire utilisées pour effectuer des paiements électroniques comportent un composant semi-conducteur, appelé aussi puce, disposé sur un élément intermédiaire portant des contacts électriques auxquels le composant est relié par des fils métalliques.

L'ensemble de l'élément intermédiaire et du composant semi-conducteur constitue un module électronique dont les faibles dimensions nécessitent qu'il soit intégré à un support de dimensions supérieures, plus facilement manipulable, appelé corps de carte.

Les corps de carte ont aujourd'hui un format standardisé par la norme ISO, à savoir 85,6 mm de longueur, 54 mm de largeur et 0,80 mm d'épaisseur.

Le module électronique peut être incorporé à la carte par collage dans une cavité usinée pour les corps de carte laminés, ou encore par introduction à l'intérieur du moule lorsque le corps de carte est moulé.

Bien entendu, en aucun cas le module électronique une fois qu'il a été intégré au corps de carte ne peut en être séparé. Lorsque le montant disponible d'une télécarte par exemple est épuisé, la carte dans son ensemble, c'est-à-dire module et corps de carte, doit être jetée.

Il existe par ailleurs dans le domaine de la téléphonie mobile des modules électroniques qui sont portés par des minicartes (appelé "plug" en anglo-saxon) de dimensions beaucoup plus réduites que les cartes ISO précitées et destinées à être introduites dans un téléphone mobile.

Certaines de ces minicartes sont présentées sur une carte au format ISO à laquelle elles peuvent être mécaniquement solidarisées à l'aide par exemple de glissières disposées sur la surface de la carte.

La carte proprement dite ne sert que de support auxdites minicartes, celles-ci devant en être séparées pour utilisation, puis réintroduites après utilisation pour rangement et transport.

Dans d'autres cas, les minicartes de téléphonie mobile sont vendues intégrées de manière sécable à un corps de carte au format ISO. Pour dégager la minicarte, l'utilisateur doit casser les attaches reliant la minicarte au corps de carte, ceci de façon irréversible. Le corps de carte devenu inutile est alors jeté.

On notera que dans l'un ou l'autre des exemples qui viennent d'être cités, la présence d'un corps de carte au format ISO n'a pour but que de remédier aux faibles dimensions de la minicarte en proposant à l'usager un support plus facile à manipuler.

Il faut également observer qu'en aucun cas le corps de carte ne joue un rôle dans la mise en oeuvre des modules électroniques.

D'autres exemples encore sont divulgués dans les documents DE-C-38 04 361 et FR-A-2 538 930. Les caractéristiques dans le préambule de la revendication 1 sont connues de DE-C-38 04 361.

Enfin, un dernier exemple est divulgué dans le document EP-A2-0 702 325, qui appartient à l'état de la technique défini par l'article 54(3) CBE.

Aussi, le problème technique à résoudre par l'objet de la présente invention est de proposer une carte de paiement électronique comportant un support d'épaisseur normalisée et un module électronique à composant semi-conducteur, destiné à être incorporé audit support, carte dans laquelle, d'une part, le module électronique serait véritablement interchangeable au sens où, après épuisement du nombre de transactions initialement prévues, il pourrait être remplacé par un nouveau module sans changement du support, et, d'autre part, dans laquelle ledit module ne pourrait être opérationnel qu'en association avec ledit support, comme dans le cas des télécartes dc publiphonie actuellement utilisées.

La solution au problème technique posé consiste, selon la présente invention, en une carte de paiement électronique comportant un support d'épaisseur normalisée et un module électronique à composant semi-conducteur, destiné à être incorporé audit support, ledit module électronique étant inclus dans une minicarte d'épaisseur égale à ladite épaisseur normalisée, ledit support présentant une ouverture pour recevoir ladite minicarte, et ladite ouverture et la minicarte comprenant des moyens conjugués de mise en place réversible de ladite minicarte dans l'ouverture, aptes, d'une part à empêcher un mauvais positionnement de la minicarte dans l'ouverture et, d'autre part, à intégrer la minicarte exactement dans l'épaisseur du support, caractérisée en ce que lesdits moyens conjugués de mise en place réversible comprennent des évidements pratiqués sur deux côtés de l'ouverture, destinés à coopérer avec deux languettes conjuguées d'épaisseur complémentaire auxdits évidements, aménagées sur la minicarte, et deux languettes aménagées partiellement sur deux autres côtés de l'ouverture, destinées à coopérer avec deux évidements conjugués complémentaires pratiqués sur la minicarte.

Il est ainsi possible d'acheter, dans un premier temps, une carte de paiement conforme à l'invention avec son support, ou corps de carte, et une minicarte neuve, puis, après épuisement de la minicarte, de n'acheter qu'une nouvelle minicarte de remplacement tout en conservant le même support.

De plus, lorsque la minicarte est introduite dans le support, l'ensemble satisfait aux normes ISO, notamment en épaisseur, ce qui permet d'utiliser la carte de l'invention de façon tout à fait normale et habituelle.

On comprend que le support, destiné à être conservé par son propriétaire, puisse être personnalisé et porter des indications comme l'adresse, voire la photographie, du porteur.

Les minicartes elles-mêmes peuvent avoir, par exemple, des couleurs différentes selon leur valeur financière ou le nombre d'unités disponibles. On peut également prévoir d'inscrire au dos desdites minicartes des informations diverses (numéros de série, de surveillance, etc...) ou encore imprimer une minipublicité.

On obtient ainsi un détrompage de positionnement de la minicarte dans le sens recto-verso.

Un moyen d'éviter également un mauvais positionnement de la minicarte dans son plan consiste, selon l'invention, en ce que l'ouverture du support et la minicarte présentent une forme trapézoïdale, lesdits évidements étant pratiqués sur deux côtés opposés parallèles de ladite ouverture, et lesdites languettes de l'ouverture étant aménagées partiellement sur deux autres côtés opposés de ladite ouverture, l'ouverture étant totalement dégagée à la base la plus large de ladite forme trapézoïdale.

La description qui va suivre en regard des dessins annexés, donnés à titre d'exemples non limitatifs fera bien comprendre en quoi consiste l'invention et comment elle peut être réalisée.

La figure 1a est une vue de dessus d'une ouverture d'une carte de paiement électronique conforme à l'invention.

La figure 1b est une vue de côté en coupe de l'ouverture de la figure 1a.

La figure 2a est une vue de dessus d'une minicarte d'une carte de paiement électronique conforme à l'invention.

La figure 2b est une vue de côté en coupe de la minicarte de la figure 2a.

La figure 3 est une vue de côté en coupe de l'ensemble de la minicarte des figures 2a et 2b disposée dans l'ouverture des figures 1a et 1b.

La figure 4 est une vue de côté en coupe illustrant la mise en place de la minicarte des figures 2a et 2b dans l'ouverture des figures 1a et 1b.

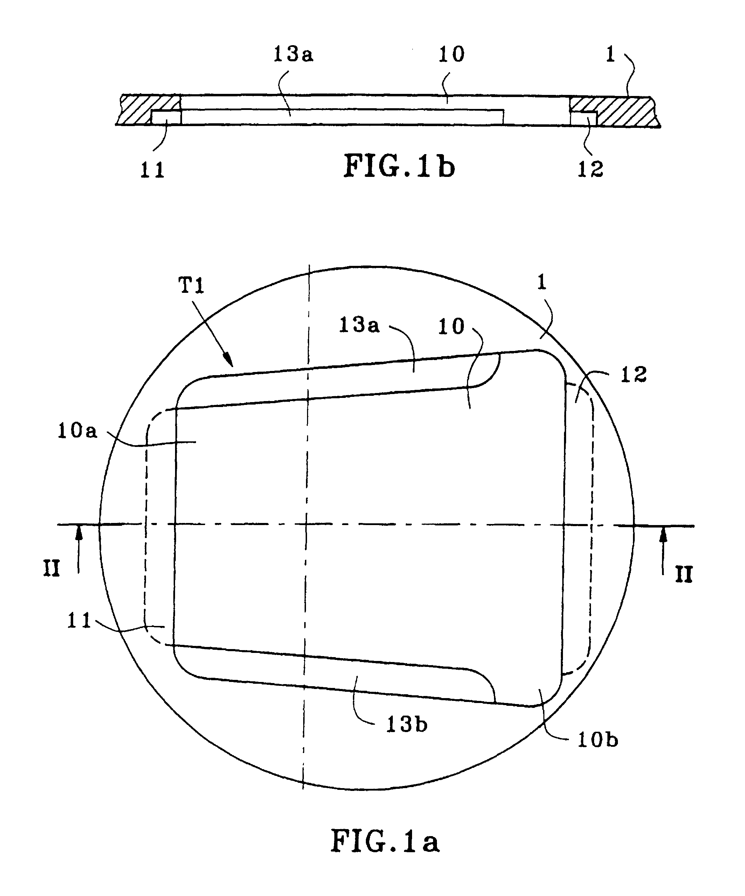

Les figures 1a et 1b montrent en vue de dessus et en coupe une ouverture 10 pratiquée à travers le support 1 d'une carte de paiement électronique. Le support 1, représenté en partie seulement sur les figures précitées, est en fait un corps de carte à mémoire dont les dimensions, en particulier l'épaisseur, sont définies par la norme ISO rappelée ci-dessus.

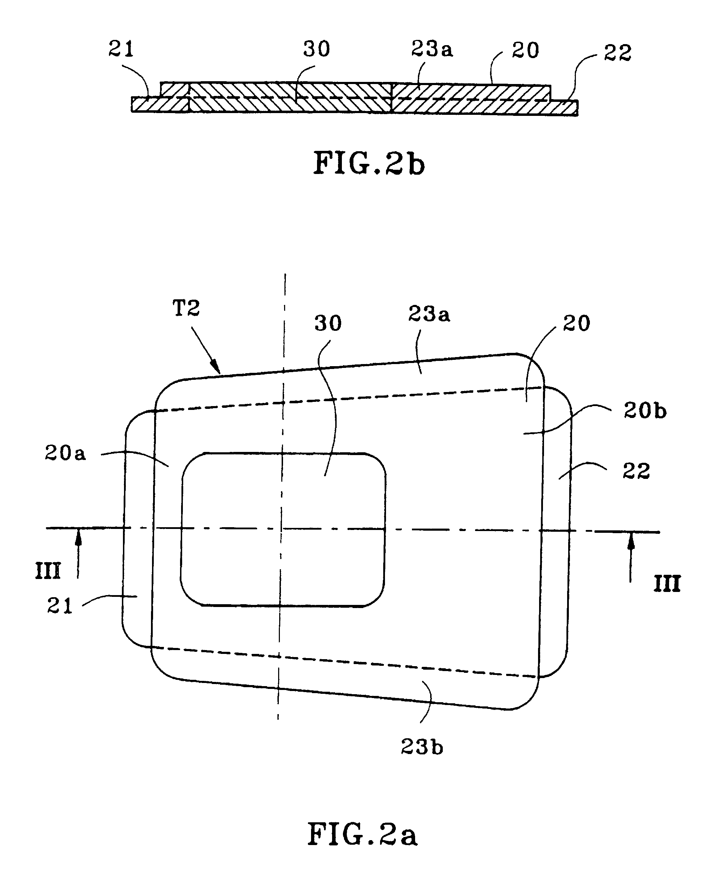

L'ouverture 10 du support 1 est prévue pour recevoir une minicarte 20 amovible représentée en vue de dessus et en coupe sur les figures 2a et 2b. Cette minicarte 20 porte dans son épaisseur, laquelle est égale à l'épaisseur normalisée du support 1, un module électronique 30 constitué, de manière classique, d'un composant semi-conducteur, non représenté en lui-même, et d'un élément intermédiaire, également non représenté, portant des connexions électriques pour établir le contact électrique avec le lecteur de la carte.

L'intégration du module électronique 30 dans la minicarte 20 peut se faire au moyen de toutes techniques bien connues dans le domaine des cartes à mémoire. Toutefois, en l'espèce, la minicarte 20 étant de préférence moulée, il y a avantage à utiliser un procédé d'intégration consistant à introduire le module électronique 30 directement dans le moule lors du moulage de la minicarte 20.

Dans le même ordre d'idée, il convient ici de préciser que, compte tenu de la présence de l'ouverture 10, il est également préférable de réaliser le support 1 par moulage. Toutefois, ladite ouverture peut aussi être obtenue pour usinage ou découpage du support.

Les matériaux utilisés aussi bien pour le support 1 que pour la minicarte 20 sont ceux habituellement mis en oeuvre dans cette technologie, à savoir le polyéthylène et les polycarbonates.

Comme le montrent les figures 1a à 2b, l'ouverture 10 et la minicarte 20 présentent des moyens conjugués de mise en place réversible de ladite minicarte 20 dans ladite ouverture 10, ces moyens étant aptes, d'une part, à empêcher un mauvais positionnement de la minicarte 20 dans l'ouverture 10, et d'autre part, à intégrer la minicarte 20 exactement dans l'épaisseur du support 1.

De manière plus précise, dans l'exemple de réalisation des figures 1a à 2b, lesdits moyens conjugués de mise en place réversible comprennent une même forme trapézoïdale T1, T2 donnée à l'ouverture 10 et à la minicarte 20. Cette forme particulière asymétrique permet, comme on le verra en détail plus loin, une mise en place plus facile de la minicarte 20 dans l'ouverture 10 par engagement de l'extrémité étroite 20a de la minicarte dans la base 10b la plus large de l'ouverture. La forme trapézoïdale sert aussi à empêcher un mauvais positionnement de la minicarte 20 dans son plan. Une position tête-bêche par rapport à la position nominale aurait pour conséquence de ne pas assurer des contacts électriques corrects avec le lecteur de carte.

Les moyens conjugués de mise en place réversible de la minicarte 20 dans l'ouverture 10 comprennent également des évidements 11, 12 pratiqués sur deux côtés opposés parallèles de l'ouverture 10, destinés à coopérer par engagement avec deux languettes 21, 22 conjuguées d'épaisseur complémentaire à celle desdits évidements 11, 12, aménagées sur les côtés correspondants de la minicarte 20.

De même, l'ouverture 10 présente, sur les deux autres côtés opposés, deux languettes 13a, 13b n'occupant que partiellement lesdits côtés de manière à ce que l'ouverture 10 soit totalement dégagée à la base 10b la plus large de la forme trapézoïdale T1.

La coopération entre évidements et languettes ne pouvant être obtenue que de manière unique, on évite un mauvais positionnement recto-verso de la minicarte dans l'ouverture.

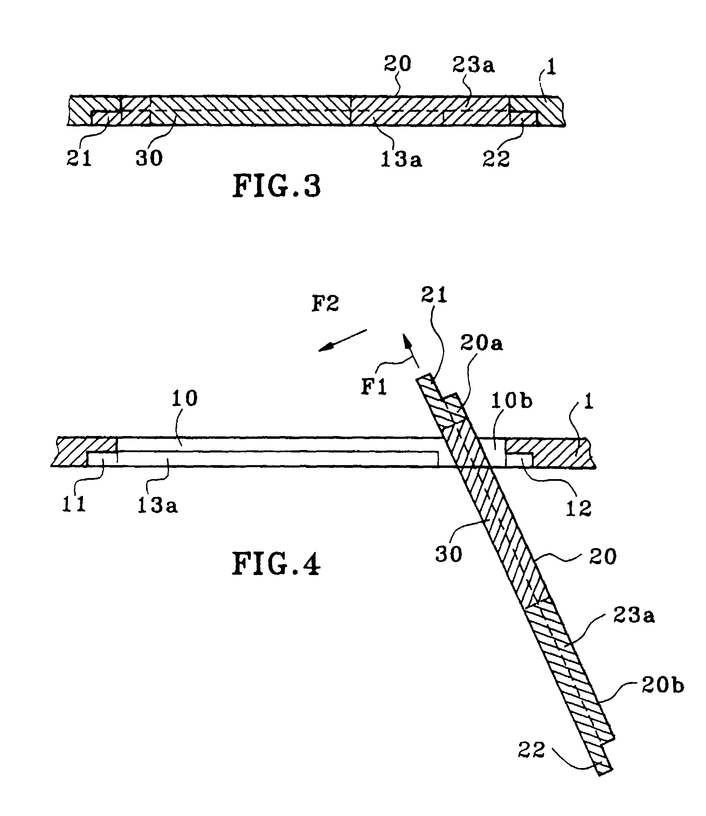

La figure 3 montre l'assemblage complet de la minicarte 20 dans l'ouverture 10 du support 1. On peut voir que la minicarte est parfaitement intégrée dans l'épaisseur normalisée du support 1, et peut donc être utilisée tout à fait normalement comme une carte à mémoire à module fixe.

On a illustré sur la figure 4 comment la minicarte 20 est mise en place dans l'ouverture 10.

La minicarte 20 est introduite par sa base la plus étroite 20a à travers la base la plus large 10b de l'ouverture, laquelle aura été réservée sur toute sa largeur du fait que les languettes 13a et 13b ne s'étendent que partiellement le long des deux autres côtés opposés à partir de la base la plus étroite 10a de l'ouverture. Le mouvement d'introduction est représenté par la flèche F1 de la figure 4.

Puis, l'utilisateur effectue un basculement de la minicarte 20 dans le sens de la flèche F2 de façon à engager, avec un léger effort de flexion, la languette 21 de la minicarte dans l'évidement 11 de l'ouverture. Dans le même temps, la languette 22 vient s'engager naturellement dans l'évidement 12 correspondant.

Pour retirer la minicarte 20 de l'ouverture 10, il suffit d'appuyer sur la minicarte dans sa partie la plus large 20b pour dégager la languette 22 de l'évidement 12, puis à la faire glisser pour dégager la languette 21 de l'évidement 11 et effectuer les mouvements inverses à ceux indiqués par les flèches F2 et F1 dans cet ordre.

Bien entendu, l'invention n'est pas limitée à la seule forme trapézoïdale de l'ouverture et de la minicarte. En particulier, il est prévu que, comme pour les cartes "plug" utilisées en téléphonie mobile, l'ouverture du support et la minicarte présentent une forme rectangulaire dont au moins un angle est biseauté, lesdits évidements de l'ouverture étant pratiqués sur deux côtés parallèles de ladite ouverture, et lesdites languettes de l'ouverture étant aménagées partiellement sur deux autres côtés parallèles de ladite ouverture, l'ouverture étant totalement dégagée sur un côté opposé audit angle biseauté.

## Revendications

1. Carte de paiement électronique comportant un support (1) d'épaisseur normalisée et un module électronique (30) à composant semi-conducteur, destiné à être incorporé audit support (1), ledit module électronique (30) étant inclus dans une minicarte (20) d'épaisseur égale à ladite épaisseur normalisée, ledit support (1) présentant une ouverture (10) pour recevoir ladite minicarte (20), et ladite ouverture (10) et la minicarte (20) comprenant des moyens (T1, T2, 11, 12, 21, 22, 13a, 13b, 23a, 23b) conjugués de mise en place réversible de ladite minicarte dans l'ouverture, aptes, d'une part à empêcher un mauvais positionnement de la minicarte (20) dans l'ouverture (10) et, d'autre part, à intégrer la minicarte (20) exactement dans l'épaisseur du support (1), **caractérisée en ce que** lesdits moyens conjugués de mise en place réversible comprennent des évidements (11, 12) pratiqués sur deux côtés de l'ouverture (10), destinés à coopérer avec deux languettes (21, 22) conjuguées d'épaisseur complémentaire auxdits évidements (11, 12), aménagées sur la minicarte (20), et deux languettes (13a, 13b) aménagées partiellement sur deux autres côtés de l'ouverture (10), destinées à coopérer avec deux évidements (23a, 23b) conjugués complémentaires pratiqués sur 1a minicarte (20).

2. Carte selon la revendication 1, **caractérisée en ce que** l'ouverture (10) du support (1) et la minicarte (20) présentent une forme trapézoïdale (T1, T2), lesdits évidements (11, 12) de l'ouverture (10) étant pratiqués sur deux côtés opposés parallèles de ladite ouverture, et lesdites languettes (13a, 13b) de l'ouverture (10) étant aménagées partiellement sur deux autres côtés opposés de ladite ouverture, l'ouverture (10) étant totalement dégagée à la base la plus large (10b) de ladite forme trapézoïdale (T1).

3. Carte selon la revendication 1, **caractérisée en ce que** l'ouverture du support et la minicarte présentent une forme rectangulaire dont au moins un angle est biseauté, lesdits évidements de l'ouverture étant pratiqués sur deux côtés opposés parallèles de ladite ouverture, et lesdites languettes de l'ouverture étant aménagées partiellement sur deux autres côtés parallèles de ladite ouverture, l'ouverture étant totalement dégagée sur un côté opposé audit angle biseauté.

4. Carte selon l'une quelconque des revendications 1 à 3, **caractérisée en ce que** la minicarte (20) est moulée.

5. Carte selon l'une quelconque des revendications 1 à 4, **caractérisée en ce que** le support (1) est moulé.

6. Carte selon l'une quelconque des revendications 1 à 4, **caractérisée en ce que** le support (1) est usiné.

7. Carte selon l'une quelconque des revendications 1 à 4, **caractérisée en ce que** le support (1) est découpé.

## Patentansprüche

1. Elektronische Zahlkarte mit einem Träger (1) mit genormter Stärke und einem Elektronikmodul (30) mit einer Halbleiterkomponente, das dazu vorgesehen ist, in den besagten Träger (1) eingesetzt zu werden, wobei das besagte Elektronikmodul (30) in einer Minikarte (20) der gleichen Stärke wie die besagte genormte Stärke enthalten ist, der besagte Träger (1) eine Öffnung (10) zur Aufnahme der besagten Minikarte (20) aufweist und die besagte Öffnung (10) und die Minikarte (20) gekoppelte Mittel (T1, T2, 11, 12, 21, 22, 13a, 13b, 23a, 23b) zum reversiblen Einsetzen der besagten Minikarte in die Öffnung umfassen, die einerseits dazu fähig sind, ein falsches Anordnen der Minikarte (20) in der Öffnung (10) zu verhindern und andererseits die Minikarte (20) exakt in die Stärke des Trägers (1) zu integrieren, **dadurch gekennzeichnet, dass** die besagten gekoppelten Mittel zum reversiblen Einsetzen auf zwei Seiten der Öffnung (10) eingearbeitete Aussparungen (11, 12) umfassen, die dazu bestimmt sind, mit zwei gekoppelten, ergänzend zur Stärke der besagten Aussparungen (11, 12) an der Minikarte (20) angebrachten Laschen (21, 22) zusammenzuwirken sowie zwei Laschen (13a, 13b), welche teilweise an zwei anderen Seiten der Öffnung (10) angeordnet sind und dazu bestimmt sind, mit zwei ergänzenden, gekoppelten auf der Minikarte (20) eingearbeiteten Aussparungen (23a, 23b) zusammenzuwirken.

2. Karte nach Anspruch 1, **dadurch gekennzeichnet, dass** die Öffnung (10) des Trägers (1) und die Minikarte (20) eine Trapezform (T1, T2) aufweisen, wobei die besagten Aussparungen (11, 12) der Öffnung (10) an zwei gegenüberliegenden parallelen Seiten der besagten Öffnung angeordnet sind und die besagten Laschen (13a, 13b) der Öffnung (10) teilweise an zwei anderen gegenüberliegenden Seiten der besagten Öffnung angeordnet sind und die Öffnung (10) auf der längeren Grundseite (10b) der besagten Trapezform (T1) völlig frei ist.

3. Karte nach Anspruch 1, **dadurch gekennzeichnet, dass** die Öffnung des Trägers und die Minikarte eine rechteckige Form aufweisen, bei der mindestens ein Eck abgeschrägt ist, wobei die besagten Aussparungen der Öffnung an zwei gegenüberliegenden parallelen Seiten der besagten Öffnung angeordnet sind und die besagten Laschen der Öffnung teilweise an zwei anderen parallelen Seiten der besagten Öffnung angebracht sind und die Öffnung auf einer dem besagten abgeschrägten Eck gegenüberliegenden Seite völlig frei ist.

4. Karte nach irgendeinem der Ansprüche 1 bis 3, **dadurch gekennzeichnet, dass** die Minikarte (20) geformt wird.

5. Karte nach irgendeinem der Ansprüche 1 bis 4, **dadurch gekennzeichnet, dass** der Träger (1) geformt wird.

6. Karte nach irgendeinem der Ansprüche 1 bis 4, **dadurch gekennzeichnet, dass** der Träger (1) bearbeitet wird.

7. Karte nach irgendeinem der Ansprüche 1 bis 4, **dadurch gekennzeichnet, dass** der Träger (1) ausgeschnitten wird.

## Claims

1. An electronic payment card comprising a support (1) of standardized thickness and an electronic module (30) having a semiconductor component, the module being designed to be incorporated in said support (1), wherein said electronic module (30) is included in a miniature card (20) of thickness equal to said standardized thickness, said support (1) having an opening (10) for receiving said miniature card (20), and said opening (10) and the miniature card (20) including complementary means (T1, T2, 11, 12, 21, 22, 13a, 13b, 23a, 23b) for reversibly installing said miniature card in the opening and suitable firstly for preventing the miniature card (20) being wrongly positioned in the opening (10) and secondly for integrating the miniature card (20) exactly in the thickness of the support (1), **characterized in that** said complementary means for reversible installation comprise setbacks (11, 12) made on two sides of the opening (10) designed to receive two matching tongues (21, 22) of the same thickness as said setbacks (11, 12) formed on the miniature card (20), and two tongues (13a, 13b) partially formed on two other sides of the opening (10), designed to fit in two matching complementary setbacks (23a, 23b) formed on the miniature card (20).

2. A card according to claim 1, **characterized in that** the opening (10) of the support (1) and the miniature card (20) are trapezium-shaped (T1, T2), said setbacks (11, 12) in the opening (10) being formed in two parallel opposite sides of said opening, and said tongues (13a, 13b) of the opening (10) projecting along part only of the other two opposite sides of said opening, the opening (10) being entirely free at the wide base (10b) of said trapezium shape (T1).

3. A card according to claim 1, wherein the opening of the support and the miniature card are rectangular in shape with at least one cut-off corner, said setbacks in the opening being formed on two opposite parallel sides of said opening and said tongues of the opening being provided over part of the length of two other parallel sides of said opening, the opening being entirely free along a side remote from said cut-off corner.

4. A card according to any of claims 1 to 3, wherein the miniature card (20) is molded.

5. A card according to any of claims 1 to 4, wherein the support (1) is molded.

6. A card according to any of claims 1 to 4, wherein the support (1) is machined.

7. A card according to any of claims 1 to 4, wherein the support (1) is cut out.
